# EUROPEAN PATENT SPECIFICATION

(11) **EP 2 513 180 B1**
(45) Date of publication and mention of the grant of the patent: **20.03.2019**
(21) Application number: 10798063.3
(22) Date of filing: 16.12.2010
(51) Int. Cl.: C08G 18/10, C08G 18/48, C08G 18/72, C08G 18/78, C08K 5/52

(54) **FLAME-RETARDANT MIXTURE FOR POLYURETHANE FOAMS**
FLAMMHEMMENDE ZUSAMMENSETZUNG FUR POLYURETHANSCHAUMSTOFFE
COMPOSITION IGNIFUGE POUR MOUSSES DE POLYURETHANE

(30) Priority: 18.12.2009 IT MI20092226
(43) Date of publication of application: 24.10.2012
(73) Proprietor: Dow Global Technologies LLC, Midland, MI 48674 (US)
(72) Inventor: BATTISTINI, Alessia, I-42010 Massenzatico (IT); SABADINI, Alessio, I-42100 Reggio Emilia (IT); BERTUCELLI, Luigi, I-42100 Reggio Emilia (IT); CASAGRANDE, Gianluca, I-41013 Castelfranco Emilia (IT)
(74) Representative: Beck Greener
(86) International application number: PCT/EP2010/069980
(87) International publication number: WO 2011/073352

(56) References cited:
- WO-A1-2009/009006
- WO-A2-2008/075344
- US-A- 4 052 346
- US-A- 5 830 926

## Description

This invention relates to a flame-retardant mixture for polyurethane foams and to flame-resistant, resilient, flexible polyurethane foams made using that mixture. Flexible polyurethane foam is used in a wide range of cushioning applications. Among these are cushions for various types of seating products. These seating products may be, for example, home furnishings such as chairs, sofas, recliners, benches, chaises, ottomans and similar products. Other seating products include cushioned furniture for office or institutional use, as well as seats for automobiles and other vehicles. A typical product of this type will include one or more polyurethane foam cushions that are covered with some fabric.

These polyurethane foams are generally characterized as elastomeric or "flexible" by virtue of being easily compressible and, "resilient", in that, when a compressive force is removed, the foam recovers its original shape rapidly and with force. These attributes are usually expressed quantitatively as "indentation load deflection", which measures the force needed to compress the foam by a specified proportion of its original thickness, and by a ball rebound test, in which a ball is dropped onto the foam from a specified height, and the height to which the ball bounces is measured. Flexible polyurethane foams for seating applications generally exhibit a value of at least 40% and more typically at least 50% on the ball rebound test of ASTM D3574.

Polyurethane foams, being organic materials, are susceptible to combustion, and their cellular nature compounds this problem because of the ease with which oxygen and heat can permeate the foam to support the combustion process. This flammability is a very significant safety concern, and as a result many jurisdictions have specified that these foams, or furniture made from them, pass certain flammability tests. The tests vary from jurisdiction to jurisdiction. For furniture, two important tests are the UNI 9175 C.S.E. RF4 test and the California 1 17 test.

It is usually necessary to incorporate some flame retardant into the foams to enable them to pass the flammability tests. Although a very wide range of materials are known to impart some degree of flame retardant properties to various polymeric materials, in practice there are very few flame retardant packages that perform well enough to enable polyurethane foams to pass tests such as the UNI 9175 C.S.E. RF4 test and the California 1 17 test, and which are suitable in other respects. Many otherwise suitable flame retardant compounds can affect the way in which a polyurethane foam system reacts, which can adversely impact both the production process itself as well as the properties of the foam. Others can plasticize or otherwise degrade foam properties, even if they do not impact the foaming reaction itself.

In addition, many flame retardant compounds are facing regulatory pressure, generate a lot of smoke, contribute to the toxicity of the combustion gasses, or are too expensive.

One flame retardant package that has found success is a mixture of dibromoethyldibromocyclohexane and tris(2-chloroisopropyl)phosphate, which is used extensively in the manufacture of polyurethane foam for seating applications, especially in Europe and Italy in particular. Dibromoethyldibromocyclohexane is no longer being manufactured, and therefore an alternative flame retardant package is needed.

However, the flame retardancy cannot be achieved at the expense of needed physical and other performance properties.

US-A-4052346 discloses polyurethane and/or polyurea polymers which contains 2,2-bis-bromomethyl-3-bromo-1-propynyl bound to the polymer through urethane linkages which can contain halogenated phosphate esters.

WO-A-2008/O75344 and WO-A-2009/009006 disclose the use of 2,2-bis(chloromethyl) trimethylenebis(bis(2-chloroethyl)phosphate) as a flame retardant in the preparation of flexible polyurethane foams. In particular WO-A-2008/O75344 discloses flame-retardant flexible polyurethane foams prepared from phosphate esters such as 2,2-bis(chloromethyl)-trimethylenebis(bis(2-chloroethyl)phosphate). WO-A-2009/009006 discloses flexible polyurethane foam prepared from 2,2-bis(chloromethyl)trimethylenebis(bis(2-chloroethyl)phosphate) as a flame retardant component.

The invention provides a two-part polyurethane- and/or polyurea-forming composition comprising a formulated isocyanate-reactive component and a formulated isocyanate component, wherein the formulated isocyanate-reactive component includes at least one polyol and at least 2 weight percent, based on the weight of the formulated isocyanate-reactive composition, of tribromoneopentyl alcohol (2,2-bis-(bromomethyl)-3-bromo-1 - propanol) and the formulated isocyanate component contains at least one organic polyisocyanate and at least 2 weight percent, based on the weight of the formulated polyol composition, of 2,2-bis(chloromethyl)trimethylene bis(bis(2-chloroethyl)phosphate). The invention is also a polyurethane and/or polyurea polymer made by mixing the isocyanate-reactive component with the isocyanate component and subjecting the resulting mixture to conditions sufficient that the components react to form a polyurethane and/or polyurea polymer. One of or both of the components may contain a blowing agent, in which case the resulting polymer will normally be a foam.

This invention is also a process for preparing a flexible polyurethane foam, comprising
A. forming a reaction mixture including a formulated isocyanate reactive component and a formulated isocyanate component as specified above, wherein the formulated isocyanate reactive component includes at least one polyol having a hydroxyl equivalent weight of at least 200, and 3.5 to 5 parts of water per 100 parts by weight of total polyol, and
B. subjecting the reaction mixture to conditions sufficient to cause the reaction mixture to expand and cure to form a polyurethane foam.

The invention is also a polyurethane foam made according to such a process. The combination of 2,2-bis(chloromethyl)trimethylene bis(bis(2-chloroethyl)phosphate) and tribromoneopentyl alcohol have been found to provide polyurethane and/or polyurea polymers, especially polyurethane foams, with excellent flame retardant properties. Certain polyurethane foams containing effective levels of these compounds have been found to merit class 1, 2 or 3 IM ratings when tested as naked (uncovered) foams on the UNI 9175 C.S.E. FR4 fire test, as is described more fully below. In addition, foams made using this flame retardant combination also often have physical properties that are comparable to otherwise similar foams that are made using a dibromoethyldibromocyclohexane and tris(2-chloroisopropyl)phosphate mixture.

The polyurethane and/or polyurea polymer of the invention preferably contains at least 1 % by weight of 2,2-bis(chloromethyl)trimethylene bis(bis(2-chloroethyl)phosphate), and preferably at least about 1 .5% by weight thereof and still more preferably at least about 1 .75% by weight thereof. It may contain as much as 8% by weight of 2,2-bis(chloromethyl)-trimethylene bis(bis(2-chloroethyl)phosphate), but preferably contains no more than 6% by weight thereof and more preferably no more than 5% by weight thereof. 2,2-bis(chloromethyl)trimethylene bis(bis(2-chloroethyl)phosphate) is not believed to react with the other components of a polyurethane- or polyurea-forming composition, and therefore is believed to become dispersed or dissolved into the polymer. The molecular weight of this material is high enough that is normally does not migrate out of the polymer during conditions encountered in its manufacture or normal use.

Tribromoneopentyl alcohol, on the other hand, contains a hydroxyl group and therefore will react with an isocyanate group to form a tribromoneopentyl group that is bound into the polymer structure through a urethane linkage. This arrangement is illustrated by structure I : 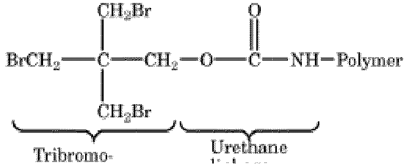 neopentyl group linkage

The polyurethane and/or polyurea polymer may contain at least 1 % by weight of tribromoneopentyl groups, 1 .25% or more by weight of tribromoneopentyl groups, or 1 .5% or more by weight thereof. It may contain up to as much as 4% by weight of tribromoneopentyl groups, or up to 3.5% by weight thereof, or up to 2.5% by weight thereof.

Polyurethane and/or polyurea polymers in accordance with the invention are made by reacting at least one isocyanate-reactive compound with at least one polyisocyanate, in the presence of 2,2-bis(chloromethyl)trimethylene bis(bis(2-chloroethyl)phosphate) and tribromoneopentyl alcohol.

The isocyanate-reactive material can be any organic compound, polymer or mixture of compounds and/or polymers that contain two or more hydroxyl, primary amino and/or secondary amino groups per molecule. The isocyanate-reactive groups are most commonly aliphatic hydroxyl groups. Amino groups, when present, may be aliphatic or aromatic. Hydroxyl groups are preferably aliphatic (including cycloaliphatic) and can be primary or secondary. The isocyanate-reactive material may contain, for example, from 2 to 16 hydroxyl, primary amino and/or secondary amino groups per molecule. For most applications, the isocyanate-reactive material will contain from 2 to 8 or from 2 to 4 of these reactive groups per molecule. The isocyanate-reactive materials may have equivalent weights of from about 30 to about 10,000 per isocyanate-reactive group. The number of isocyanate-reactive groups per molecule and the equivalent weight are generally selected with the particular polyurethane product in mind. Mixtures of isocyanate-reactive materials are often used in particular applications.

Useful polyisocyanates include those having an average of 1.8 or more isocyanate groups per molecule. The isocyanate functionality is preferably from about 1 .9 to 4, more preferably from 1 .9 to 3.5 and especially from 2.0 to 3.0. Suitable polyisocyanates include aromatic, aliphatic and cycloaliphatic polyisocyanates. Exemplary polyisocyanates include, for example, m-phenylene diisocyanate, 2,4-and/or 2,6-toluene diisocyanate (TDI), the various isomers of diphenylmethanediisocyanate (MDI), hexamethylene-1 ,6-diisocyanate, tetramethylene-1,4-diisocyanate, cyclohexane-1,4-diisocyanate, hexahydrotoluene diisocyanate, hydrogenated MDI (H-|₂ MDI), naphthylene-1 ,5-diisocyanate, methoxyphenyl-2,4-diisocyanate, 4,4'-biphenylene diisocyanate, 3,3'-dimethoxy-4,4'-biphenyl diisocyanate, 3,3'-dimethyldiphenylmethane-4,4'-diisocyanate, 4,4',4"-triphenylmethane tri-isocyanate, polymethylene polyphenylisocyanates, socalled polymeric MDI products (or PMDI, i.e., mixtures of polymethylene polyphenylisocyanates with MDI), hydrogenated polymethylene polyphenylisocyanates, toluene-2,4,6-triisocyanate, and 4,4'-dimethyl diphenylmethane-2,2',5,5'-tetraisocyanate.

The particular manufacturing process used to prepare the polyurethane is not considered to be critical to the invention. Therefore, a variety of molding, casting, bulk polymerization, dispersion or solution polymerization and like methods can be used. Similarly, a wide range of polyurethane products can be prepared, including non-cellular elastomers, microcellular elastomers, structural foams, rigid insulating foams, viscoelastic foams, flexible foams (both molded or slabstock types), and reinforced polymers of various types. Foaming processes such as slabstock foam manufacturing processes and, especially, molded foam manufacturing processes are processes of particular interest. Resilient, flexible polyurethane foams are of particular interest.

A wide range of optional materials may be present when the polyurethane and/or polyurea polymer is manufactured, the selection of which will depend on the particular type of product being made and the attributes that are required in that product. Commonly used materials include one or more catalysts, surfactants and blowing agents. Other optional materials may include, for example, plasticizers, fillers, reinforcing agents (such as fibers), colorants, preservatives, odor masks, flame retardants, biocides, antioxidants, UV stabilizers, antistatic agents, thixotropic agents and cell openers, among others.

Because the tribromoneopentyl alcohol is a solid at room temperature, it is convenient to dissolve it into some carrier or another component so it can be mixed easily with the other components of the reaction mixture. It is preferred to dissolve it into one or more of the isocyanate-reactive materials.

2,2-bis(chloromethyl)trimethylene bis(bis(2-chloroethyl)phosphate) is a viscous liquid at 25^{Q}C, and thus can be added as a separate component if desired. However, it is often preferred to preblend 2,2-bis(chloromethyl)trimethylene bis(bis(2-chloroethyl)phosphate) into one or more of the other components of the reaction mixture, prior to conducting the polymerization reaction, to reduce viscosity and to simplify the manufacturing process. It is preferred to mix the 2,2-bis(chloromethyl)trimethylene bis(bis(2-chloroethyl)phosphate) into a polyisocyanate, prior to mixing the polyisocyanate with the isocyanate-reactive materials. 2,2-bis(chloromethyl)trimethylene bis(bis(2-chloroethyl)phosphate) is believed to be somewhat reactive with certain isocyanate-reactive materials and for that reason may not form a stable mixture with them.

Therefore, the invention lends itself readily to preparing a two-part polyurethane-and/or polyurea-forming composition. The two part composition comprises a formulated isocyanate-reactive component and a formulated isocyanate component. The formulated isocyanate-reactive component includes at least one isocyanate-reactive material and at least 2 weight percent, based on the weight of the formulated isocyanate-reactive composition, of tribromoneopentyl alcohol. A preferred amount is at least 3 weight percent or at least 5 weight percent of tribromoneopentyl alcohol. The formulated isocyanate-reactive component may contain as much as 20%, preferably as much as 15% by weight of tribromoneopentyl alcohol. The formulated isocyanate component contains at least one organic polyisocyanate and at least 2 weight percent, based on the weight of the formulated polyisocyanate composition, of 2,2-bis(chloromethyl)trimethylene bis(bis(2-chloroethyl)phosphate). It may contain at least 6 weight percent of 2,2-bis(chloromethyl)trimethylene bis(bis(2-chloroethyl)phosphate) or at least 8% 2,2-bis(chloromethyl)trimethylene bis(bis(2-chloroethyl)phosphate), and may contain as 25% by weight thereof, as much as 18 weight percent thereof, or as much as 15% thereof.

The two-part foam polyurethane- and/or polyurea-forming composition is especially suitable for preparing flexible polyurethane foam. For preparing polyurethane foam, the isocyanate-reactive component should include, as a major ingredient, at least one polyol having a hydroxyl equivalent weight of at least 200. In addition, the reaction of the isocyanate-reactive component and the isocyanate-component is conducted in the presence of a blowing agent, which preferably includes water. Various types of flexible polyurethane foam can be prepared, including viscoelastic foams, low resiliency slabstock foams, and molded foams.

Resilient, flexible polyurethane foams are of particular interest. These foams are generally characterized in having a density in the range of 2.0 to 6.0 pounds/cubic foot (32-96 kg/m³) and a resiliency, as determined using the ASTM D-3574 ball rebound test, of at least 40%, especially at least 50%. The foam may have a density from 2.5 to 4 pounds/cubic foot (40-64 kg/m³). Density is conveniently measured according to ASTM D 3574.

When making resilient, flexible polyurethane foam for most cushioning applications, the foam formulation typically includes at least one polyol that has a hydroxyl equivalent weight of at least 800, preferably at least 1000 and still more preferably at least 1500. The hydroxyl equivalent weight for this polyol may be as much as 3000, or as much as 2000. A polyol of this type is sometime referred to herein as a "base" polyol, as it usually makes up by far the major proportion, by weight, of the isocyanate-reactive materials used to make the resilient flexible foam. A mixture of these polyols may be used, in which case they together form the "base" polyol. The base polyol(s) should, in the aggregate, have an average of at least 2, preferably at least 2.5 and still more preferably at least 2.8 hydroxyl groups per molecule, and may contain, on average, up to as many as 4 or up to 3.5 hydroxyl groups per molecule. Individual polyols that make up a base polyol mixture may have hydroxyl functionalities above or below these limits, so long as the base polyols in the aggregate have the aforementioned average hydroxyl functionalities.

The base polyols may be polyether or polyester types. Hydroxy-functional acrylate polymers and copolymers are suitable. Various polyols that are prepared from vegetable oils and/or animal fats (or fatty acids derived therefrom) also can be used. These include, for example, castor oil; hydroxymethyl group-containing polyol as described in WO 2004/096882 and WO 2004/096883; amide group-containing polyol as described in WO 2007/019063; hydroxyl ester-substituted fatty acid esters as described in WO 2007/019051 ; "blown" soybean oil as described in US Published Patent Applications 2002/0121328, 2002/01 19321 and
2002/0090488; an oligomerized vegetable oil or animal fat as described in WO 06/1 16456; hydroxyl-containing cellulose-lignin materials and hydroxyl-containing modified starches.

Polyether polyols which are initiated with amines can be used. These polyols contain tertiary amino groups and for that reason tend to be auto-catalytic. An example of such a polyol is a bis (3-aminopropyl)methylamine-initiated polyol. Preferred base polyol(s) are homopolymers of propylene oxide or random or block copolymers of propylene oxide and ethylene oxide, or a copolymer (random or block) of propylene oxide and ethylene oxide. The base polyol(s) in the aggregate preferably have mainly primary hydroxyl groups, although individual polyols that make up a base polyol mixture may contain varying proportions of primary and secondary hydroxyl groups.

The base polyol for making resilient flexible foam may also be a polymer polyol, by which is meant a dispersion of finely dispersed polymer particles in a continuous polyol phase. The polyol(s) that constitute the continuous polyol phase of a polymer polyol should have characteristics of the base polyol as described above. The dispersed polymer particles may be, for example, polyurea, polyurethane, polyurethane-urea, polystyrene, polyacrylonitrile, polystyrene-co-acrylonitrile or other types. The solids content (i.e., weight of dispersed phase as a percentage of the total weight) may be from 5 to 65%.

A base polyol of interest is a propylene oxide homopolymer which is end-capped with polyoxyethylene blocks to introduce mainly primary hydroxyl groups onto the ends of the polymer chain. The ethylene oxide content of such polyols may be from 8 to 30% by weight; its equivalent weight may be from 800 to 2000, from 1000 to 2000 or from 1200 to 2000; its average hydroxyl functionality may be from 2.5 to 4.5 or, preferably, from 3.0 to 4.5; and its primary hydroxyl content may be from 70 to 100% or from 75 to 90%. Such a polyol can be prepared by adding propylene oxide and ethylene oxide sequentially to a starter compound or compounds which have, on average, the number of hydroxyl groups per molecule that is desired in the final product. It is noted that all polyether polyol hydroxyl functionalities described herein are "nominal" functionalities, i.e., those of the initiator compounds used to prepare them. It is well known that actual polyol functionalities tend to be somewhat lower than the nominal functionalities, due to the production of monofunctional impurities during the polymerization process. Two or more polyols of this type can be used.

Suitable polyisocyanates for making resilient flexible foam include MDI and derivatives of MDI such as biuret-modified "liquid" MDI products and polymeric MDI, as well as mixtures of the 2,4- and 2,6- isomers of TDI. A polyisocyanate of particular interest for making resilient flexible foam is a TDI which has been modified to contain biuret-containing oligomers. Such a biuret-modified TDI may be blended with one or more other polyisocyanates; examples of blends of this sort include blends of the biuret-modified TDI with MDI or a polymeric MDI. A biuret-modified TDI or blend thereof may contain from 2 to 30% by weight of biuret oligomers. Such polyisocyanates may be pre-reacted with a small amount of a polyol to form a prepolymer or quasi-prepolymer, prior to forming for foam.

Resilient, flexible polyurethane foam is made from the polyisocyanate by reacting it with at least one polyol that has a hydroxyl equivalent weight of at least 800, as described above, in the presence of a blowing agent, which preferably includes water, 2,2-bis(chloromethyl)trimethylene bis(bis(2-chloroethyl)phosphate) and tribromoneopentyl alcohol. The foam formulation includes water, in an amount from about 3.5 to about 5 parts per 100 parts by weight of the base polyol(s). Tribromoneopentyl alcohol may constitute from about 1 to about eight, especially from 2 to 6, percent of the total weight of the foam formulation. 2,2-bis(chloromethyl)trimethylene bis(bis(2-chloroethyl)phosphate) may constitute from 0.25 to 2%, preferably from 0.4 to 1 .25%%, of the total weight of the foam formulation.

Various other materials also can be used in producing the foam, together with these components, to make the foam, as described more fully below. The reaction is generally performed by bringing the various components of the foam formulation together and subjecting them to conditions such that the polyol, water and polyisocyanate can react to produce a high molecular weight polymer and a blowing gas. These conditions are well-known in the art. No special conditions are necessary to produce foam in accordance with this invention.

Therefore, a resilient flexible foam can be made using well-known slabstock processes, in which the foam formulation is poured into an open container and allowed to rise against its own weight against little or no applied constraint, or using a molded foam process, in which the foam formulation is introduced into a closed mold where its expansion is constricted by the internal dimensions of the mold. In slabstock processes, it is common to bring the various components of the foam formulation individually into a mix head, where they are mixed and dispensed. A similar approach may be taken to produce molded foams, but in the latter case it is more common to prepare a formulated polyol mixture, which contains the polyol(s) and other isocyanate-reactive materials, and a formulated polyisocyanate component, and to introduce those components into a mix head and from there into the mold. Water can be blended into the polyol component or fed separately into the mix head.

Slabstock processes are generally conducted with the starting materials at approximately ambient or slightly elevated temperatures. A temperature range of from 15 to 45^{Q}C is typical and from 15 to 35^{Q}C is generally preferred. The polyol and/or isocyanate components may be preheated in molded foam processes, but do not have to be. The mold may be preheated. Heat is usually applied to the mold once the foam formulation is mixed into it. Molded foam is usually demolded as soon as it has enough structural integrity to be demolded without damaging the product. Postcuring may be performed to complete the cure and fully develop foam properties

At least one catalyst normally will be present in the foam formulation. One preferred type of catalyst is a tertiary amine catalyst. The tertiary amine catalyst may be any compound possessing catalytic activity for the reaction between a polyol and a polyisocyanate and at least one tertiary amine group. Representative tertiary amine catalysts include trimethylamine, triethylamine, N-methylmorpholine, N-ethylmorpholine, N,N-dimethylbenzylamine, N,N-dimethylethanolamine, N,N,N',N'-tetramethyl-1 ,4-butanediamine, N,N-dimethylpiperazine, 1,4-diazobicyclo-2,2,2-octane, bis(dimethylaminoethyl)ether, bis(2-dimethylaminoethyl) ether, morpholine,4,4'-(oxydi-2,1 -ethanediyl)bis, triethylenediamine, pentamethyl diethylene triamine, dimethyl cyclohexyl amine, Nicety! N,N-dimethyl amine, N-coco-morpholine, N,N-dimethyl aminomethyl N-methyl ethanol amine, N, N, N'-trimethyl-N'-hydroxyethyl bis(aminoethyl) ether, N,N-bis(3-dimethylaminopropyl)N-isopropanolamine, (N,N-dimethyl) amino-ethoxy ethanol, N, N, N', N'-tetramethyl hexane diamine, 1 ,8-diazabicyclo-5,4,0-undecene-7,N,N-dimorpholinodiethyl ether, N-methyl imidazole, dimethyl aminopropyl dipropanolamine, bis(dimethylaminopropyl)amino-2-propanol,
tetramethylamino bis (propylamine), (dimethyl(aminoethoxyethyl))((dimethyl amine)ethyl)ether, tris(dimethylamino propyl) amine, dicyclohexyl methyl amine, bis(N,N-dimethyl-3-aminopropyl) amine, 1 ,2-ethylene piperidine and methyl-hydroxyethyl piperazine.

Low (up to 200) hydroxyl equivalent weight polyols that are amine-initiated are also useful catalysts. These include polyols initiated with bis(3-aminopropyl)methylamine.

Reactive (non-fugitive) amine catalysts are preferred types, as these can react with isocyanate groups and become bound into the polyurethane polymer structure. Amine catalysts sometimes can be partially or entirely replaced by amine-initiated polyether polyols, which can form part of or all of the base polyol. The foam formulation may contain one or more other catalysts, in addition to or instead of the tertiary amine catalyst mentioned before. Of particular interest among these are tin carboxylates and tetravalent tin compounds. Examples of these include stannous octoate, dibutyl tin diacetate, dibutyl tin dilaurate, dibutyl tin dimercaptide, dialkyl tin dialkylmercapto acids, dibutyl tin oxide, dimethyl tin dimercaptide, and dimethyl tin diisooctylmercaptoacetate.

Catalysts are typically used in small amounts. For example, the total amount of catalyst used may be 0.0015 to 5, preferably from 0.01 to 1 part by weight per 100 parts by weight of polyol or polyol mixture. Organometallic catalysts are typically used in amounts towards the low end of these ranges.

The resilient flexible foam formulation may contain a crosslinker, which preferably is used, if at all, in small amounts, to 2 parts, up to 0.75 parts, or up to 0.5 parts by weight per 100 parts by weight of the base polyol). The crosslinker contains at least three isocyanate-reactive groups per molecule and has an equivalent weight, per isocyanate reactive group, of from 30 to about 125 and preferably from 30 to 75. Aminoalcohols such as monoethanolamine, diethanolamine and triethanolamine are preferred types. Crosslinkers will normally be incorporated into the polyol component of a foam formulation, but may be brought to a mix head as a separate stream if they are liquids at the processing temperatures.

A surfactant is preferably included in the foam formulation to help stabilize the foam as it expands and cures. Examples of surfactants include nonionic surfactants and wetting agents such as those prepared by the sequential addition of propylene oxide and then ethylene oxide to propylene glycol, solid or liquid
organosilicones, and polyethylene glycol ethers of long chain alcohols. Ionic surfactants such as tertiary amine or alkanolamine salts of long chain alkyl acid sulfate esters, alkyl sulfonic esters and alkyl arylsulfonic acids can also be used. The surfactants prepared by the sequential addition of propylene oxide and then ethylene oxide to propylene glycol are preferred, as are the solid or liquid organosilicones. Examples of useful organosilicone surfactants include commercially available polysiloxane/polyether copolymers such as Tegostab (trademark of Goldschmidt Chemical Corp.) B-8715LF, and B-8719LF, and Niax™ L2171 surfactant from OSi Specialties. Non-hydrolyzable liquid organosilicones are more preferred. When a surfactant is used, it is typically present in an amount of 0.0015 to 1 part by weight per 100 parts by weight polyol or polyol mixture.

In addition to the foregoing, various other components may be included in the resilient flexible foam formulation. These include, for example, additional blowing agents, chain extenders, plasticizers, fillers, colorants, preservatives, odor masks, flame retardants, biocides, antioxidants, UV stabilizers, antistatic agents, thixotropic agents and cell openers.

Although it is preferred that no additional blowing agent (other than the water) be included in the foam formulation, it is within the scope of the invention to include an additional physical or chemical blowing agent. Among the physical blowing agents are gaseous or supercritical CO₂ and various hydrocarbons, fluorocarbons, hydrofluorocarbons, chlorocarbons (such as methylene chloride), chlorofluorocarbons and hydrochlorofluorocarbons. Chemical blowing agents are materials that decompose or react (other than with isocyanate groups) at elevated temperatures to produce carbon dioxide and/or nitrogen.

A chain extender is a material having exactly two isocyanate-reactive groups/molecule and has an equivalent weight per isocyanate-reactive group can range from about 30 to about 125, but is preferably from 30 to 75. The isocyanate-reactive groups are preferably aliphatic alcohol, primary amine or secondary amine groups, with aliphatic alcohol groups being particularly preferred. Examples of chain extenders include alkylene glycols such as ethylene glycol, 1 ,2- or 1 ,3-propylene glycol, 1 ,4-butanediol, and 1 ,6-hexanediol; glycol ethers such as diethylene glycol, triethylene glycol, dipropylene glycol, and tripropylene glycol; and cyclohexane dimethanol.

Examples of suitable fillers include melamine, melamine derivatives, APP, activated carbon, kaolin, montmorillonite, calcium carbonate, mica, wollastonite, talc, high-melting thermoplastics, glass, fly ash, carbon black titanium dioxide, iron oxide, chromium oxide, azo/diazo dyes, phthalocyanines, and dioxazines. The filler may impart thixotropic properties to the foamable polyurethane composition. Fumed silica is an example of such filler. When used, fillers advantageously constitute from about 0.5 to about 30%, especially about 0.5 to about 10%, by weight of the composition.

The amount of polyisocyanate that is used typically is sufficient to provide an isocyanate index of from 70 to 130, although wider ranges can be used in special cases. A preferred range is from 80 to 120 and a more preferred range is from 90 to 115.

Resilient flexible foam produced in accordance with the invention often and preferably meets the requirements, as naked foam, for a class 3 IM rating, a class 2 IM rating or, preferably, a class 1 1 M rating on the UNI 9175 C.S.E. RF4 test. Resilient, flexible foam made in accordance with the invention is useful in a variety of packaging and cushioning applications. Seating applications are of particular interest, including, for example, chairs, sofas, recliners, benches, chaises, ottomans, and similar products. Other seating products include cushioned furniture for office or institutional use, as well as seats for automobiles and other vehicles. Typically, the foam is covered with a covering of a fabric, plastic, leather or similar material, which is generally selected, based on aesthetic and functional considerations, and the covered fabric is supported on a structural support.

The following examples are provided to illustrate the invention, but are not intended to limit the scope thereof. All parts and percentages are by weight unless otherwise indicated.

### Examples 1-4

Formulated polyols are prepared from the following ingredients:
Polyol A 55.7 parts by weight
Polyol B 27.4 parts by weight
Polyol C 1 1 .7 parts by weight
Water 3.7 parts by weight
Silicone surfactants 0.7 parts by weight
Amine Catalysts 0.9 parts by weight
Tribromoneopentyl alcohol 3 or 6 parts by weight
Polyol A is a 3.0 functional, 35.5 hydroxyl number, ethylene-oxide capped polypropylene oxide) that contains 85% primary hydroxyl groups. Polyol B is a 3.0 functional, 27.5 hydroxyl number, ethylene-oxide capped polypropylene oxide) that contains 80% primary hydroxyl groups. Polyol C is a 4.2 functional, 31 hydroxyl number, ethylene-oxide capped polypropylene oxide) that contains 77% primary hydroxyl groups.

Polyisocyanate prepolymers are made by heating the following components together until they achieve a constant isocyanate content (about 33.6%):
Biuret-modified TDI : 80.9 parts by weight
Polymeric MDI : 16.1 parts by weight
33.5 OH-number, random PO/EO copolymer: 3 parts by weight
2,2-bis(chloromethyl)trimethylene bis(bis(2-chloroethyl)phosphate) 6 or 12 parts by weight
Polyurethane foams 1 -4 are made from the formulated polyols and the polyisocyanate prepolymers at 100 index by processing them through a high pressure mixing and dispensing machine. The mold is a square mold which is preheated to 50^{Q}C, and which has been treated with a mold release agent. The foam formulation is permitted to cure in the mold until it has cured enough to be demolded, about 8-10 minutes. Each foam has a core density of about 55 kg/m³. 50% Indentation load deflection is measured according to the Fiat 7M 3800 method using a 21 cm diameter test plate. 50% Compression set (with skin), 25% and 65% compression load deflection, resilience, tensile strength, tear strength and elongation are all measured according to ASTM D 3574. Results are as indicated in Table 1 below. In addition, Table 1 reports the properties of a similar foam (Comparative A) containing dibromoethyldibromocyclohexane and tris(2-chloroisopropyl)phosphate as the FR additives.

**Table 1**

| | Ex. 1 | Ex. 2 | Ex. 3 | Ex. 4 | Comp. A** |
|---|---|---|---|---|---|
| %2,2-bis(chloromethyl) trimethylene bis(bis(2-chloroethyl) phosphate in polyisocyanate side | 12 | 6 | 12 | 6 | 0* |
| %2.2-bis(chloromethyl) trimethylene bis(bis(2-chloroethyl) phosphate in foam {approx.) | 4.6 | 2.3 | 4.6 | 2.3 | 0* |
| %tribromo neopentyl alcohol in polyol side | 3 | 3 | 5 | 5 | 0* |
| %2,2-bis(bromomethyl)-3-bromo-1-propyl groups in polyurethane | 1.8 | 1.9 | 1.8 | 1.9 | 0* |
| ILD, dN | 67.8 | 77.7 | 67.6 | 75.2 | 64.6 |
| Compression Set, % | 17.3 | 15.8 | 20.1 | 20.3 | 8.0 |
| 25% CLD, kPa | 6.6 | 7.8 | 7.0 | 8.6 | 10.4 |
| 65% CLD, kPa | 20.9 | 23.9 | 22.5 | 28.0 | 23.7 |
| Resiliency, % | 54 | 55 | 52 | 53 | 59 |
| Tensile strength, N/m² | 0.257 | 0.267 | 0.263 | 0.237 | 0.197 |
| Tear strength, N/m | 0.208 | 0.202 | 0.216 | 0.248 | 0.190 |
| Elongation, % | 111 | 97 | 109 | 103 | 86 |

Foam contains dibromoethyldibromocyclohexane and tris(2-chloroisopropyl)phosphate as FR additives. "Not an example of the invention.

These results show that good quality foams can be prepared using the FR additives of the invention, with properties generally similar to those of prior art foams (Comparative Sample A). When these examples are repeated at 80 index and at 120 index, the foams again have properties similar to those of the prior art foam (made at the equivalent index).

Examples 1 -4 are repeated, each at 80, 100 and 120 index, this time assembling the foam into a specimen assembly as required by the UNI 9175 C.S.E RF4 test.

The foam that represents the chair back has a length of 450 mm, a width of 300 mm and a thickness of 75 mm. The foam that represents the seat has a length of 450 mm, a width of 150 mm and a thickness of 75 mm. The back and seat foams are assembled on a metal frame for the test procedure. Foam density is again about 55 kg/m³. The foams are conditioned at 25^{Q}C and 65% relative humidity for 24 hours, then at 80^{Q}C and 80% relative humidity for 72 hours, and then reconditioned at 25^{Q}C at 65% relative humidity for at least 12 hours prior to evaluating them according to the UNI 9175 C.S.E. RF4 test. The assemblies are separately exposed to an igniting flame for 140 seconds, with either a Trevira CS black fabric (polyester fabric) covering or a Diamante Blue, 357 C-Q 5-7 covering (acrylic covering), and the igniting flame is removed. The amount of time that elapses before the foam stops burning (visible flame) is recorded. To obtain a class 1 IM rating on this test, each foam sample must stop burning within 120 seconds of the time the flam is removed. Each of Examples 1 -4 is classified as Class 1 IM under this test, at 80, 100 and 120 index. Each performs similarly or better than the Comparative Sample A foam on this test.

### Examples 5-10

Utilizing the polyol and isocyanate formulations as described in Example 1 to 4, various amounts of the tribromo neopentyl alcohol and ,2-bis(chloromethyl) trimethylene bis(bis(2-chloroethyl) phosphate are added and the resulting foams evaluated according to the UNI 9175 C.S.E. RF4 test. The amount of the alcohol and phosphate added and the resulting evaluation, given as number of failure per total test, are given in Table 2.

**Table 2**

| Experiment No. | %tribromo neopentyl alcohol in polyol side | %2,2-bis(chloromethyl) trimethylene bis(bis(2-chloroethyl) phosphate in polyisocyanate side | core density Kg/m³ | ISO Index | n fails /n total TREVIRA CS textile** | n fails /n total DIAMANTE textile |
|---|---|---|---|---|---|---|
| Comp. B* | 5 | 0 | 51.84 | 80 | 0 of 3 | 1 of 3 |
| Comp. C | 5 | 0 | 54.19 | 100 | 0 of 3 | 3 of 3 |
| Comp. D | 5 | 0 | 55.17 | 120 | 1 of 6 | 3 of 3 |
| | | | | | | |
| 5 | 5 | 8 | 61-62 | 80 | 0 of 6 | 0 of 6 |
| 6 | 5 | 8 | 62-61 | 100 | 0 of 3 | 1 of 9 |
| 7 | 5 | 8 | 55-55 | 120 | 0 of 3 | 3 of 9 |
| | | | | | | |
| 8 | 5 | 12 | 58.17 | 80 | 0 of 3 | 0 of 3 |
| 9 | 5 | 12 | 58.51 | 100 | 0 of 3 | 0 of 6 |
| 10 | 5 | 12 | 56.85 | 120 | 0 of 3 | 0 of 6 |
| | | | | | | |
| Comp. E | 0 | 18 | 56.88 | 80 | 0 of 3 | 1 of 3 |
| Comp. F | 0 | 18 | 56.63 | 100 | 0 of 3 | 2 of 6 |
| Comp. G | 0 | 18 | 57.02 | 120 | 0 of 3 | 2 of 6 |

| | | | | | | |
|---|---|---|---|---|---|---|
| *Comp. samples are not examples of the invention. "Number of failures per number of total tests. | | | | | | |

The results show that foams, when associated with a polyester fabric (TREVIRA CS textile), generally pass the UNI 9175 C.S.E. RF4 test. For foams associated with an acylic type material (DIAMENTE textile) in the absence of the phosphate, the material fails to pass the UNI 9175 C.S.E. RF4 test at an isocyanate index of 100 or above while approximately a third of the samples failed at an index of 80. Similarly, in the absence of tribromo neopentyl alcohol, even when high levels of phosphate loading are used, there is significant failure of the samples to pass the UNI 9175 C.S.E. RF4 test with an acrylic covering. When a combination of the alcohol and phosphate are used, there is a substantial improvement in the performance of the materials, particularly for the acrylic textile in the UNI 9175 C.S.E. RF4 test.

## Claims

1. A two-part polyurethane- and/or polyurea-forming composition comprising a formulated isocyanate-reactive component and a formulated isocyanate component, wherein the formulated isocyanate-reactive component includes at least one polyol and at least 2 weight percent, based on the weight of the formulated isocyanate-reactive composition, of tribromoneopentyl alcohol and the formulated isocyanate component contains at least one organic polyisocyanate and at least 2 weight percent, based on the weight of the formulated polyisocyanate composition, of 2,2-bis(chloromethyl)trimethylene bis(bis(2-chloroethyl)phosphate).

2. A composition according to claim 1, wherein one of or both of the components contains a blowing agent.

3. A polyurethane and/or polyurea polymer made by mixing the isocyanate-reactive component and the isocyanate component of the polyurethane- and/or polyurea-forming composition of claim 1 and subjecting the resulting mixture to conditions sufficient that the components react to form a polyurethane and/or polyurea polymer.

4. A polyurethane and/or polyurea polymer according to claim 3, wherein the two-part polyurethane- and/or polyurea-forming composition utilised is a composition according to claim 2, and the resulting polyurethane and/or polyurea polymer is in the form of a foam.

5. A process for preparing a flexible polyurethane foam, according to claim 4, comprising:
A. forming a reaction mixture including a formulated isocyanate reactive component of claim 1 and a formulated isocyanate component of claim 1 , wherein the formulated isocyanate reactive component includes at least one polyol having a hydroxyl equivalent weight of at least 200, and 3.5 to 5 parts of water per 100 parts by weight of total polyol, and
B. subjecting the reaction mixture to conditions sufficient to cause the reaction mixture to expand and cure to form a polyurethane foam.

6. A polyurethane foam made according to the process of claim 5

7. The polyurethane foam of claim 4 which contains at least 1 .25% by weight of tribromoneopentyl groups.

8. The polyurethane foam of claim 7 which contains up to 3.5% by weight of tribromoneopentyl groups.

## Patentansprüche

1. Eine zweiteilige Polyurethan und/oder Polyharnstoff bildende Zusammensetzung, die eine formulierte Isocyanat-reaktive Komponente und eine formulierte Isocyanatkomponente beinhaltet, wobei die formulierte Isocyanat-reaktive Komponente mindestens ein Polyol und, bezogen auf das Gewicht der formulierten Isocyanat-reaktiven Zusammensetzung, mindestens 2 Gewichtsprozent Tribromneopentylalkohol umfasst und die formulierte Isocyanatkomponente mindestens ein organisches Polyisocyanat und, bezogen auf das Gewicht der formulierten Polyisocyanatzusammensetzung, mindestens 2 Gewichtsprozent 2,2-Bis(chlormethyl)trimethylenbis(bis(2-chlorethyl)phosphat) enthält.

2. Eine Zusammensetzung gemäß Anspruch 1, wobei eine oder beide der Komponenten ein Treibmittel enthalten.

3. Ein Polyurethan- und/oder Polyharnstoffpolymer, hergestellt durch Mischen der Isocyanat-reaktiven Komponente und der Isocyanatkomponente der Polyurethan und/oder Polyharnstoff bildenden Zusammensetzung gemäß Anspruch 1 und Aussetzen der resultierenden Mischung gegenüber Bedingungen, die ausreichen, dass die Komponenten reagieren, um ein Polyurethan- und/oder Polyharnstoffpolymer zu bilden.

4. Polyurethan- und/oder Polyharnstoffpolymer gemäß Anspruch 3, wobei die benutzte zweiteilige Polyurethan und/oder Polyharnstoff bildende Zusammensetzung eine Zusammensetzung gemäß Anspruch 2 ist und das resultierende Polyurethan- und/oder Polyharnstoffpolymer in Form eines Schaumstoffs vorliegt.

5. Ein Verfahren zum Herstellen eines flexiblen Polyurethanschaumstoffs gemäß Anspruch 4, das Folgendes beinhaltet:
A. Bilden einer Reaktionsmischung, umfassend eine formulierte Isocyanat-reaktive Komponente gemäß Anspruch 1 und eine formulierte Isocyanatkomponente gemäß Anspruch 1, wobei die formulierte Isocyanat-reaktive Komponente mindestens ein Polyol mit einem Hydroxyläquivalentgewicht von mindestens 200 und 3,5 bis 5 Teilen Wasser pro 100 Gewichtsteilen Gesamtpolyol umfasst, und
B. Aussetzen der Reaktionsmischung gegenüber Bedingungen, die ausreichen, um zu bewirken, dass sich die Reaktionsmischung ausdehnt und aushärtet, um einen Polyurethanschaumstoff zu bilden.

6. Ein Polyurethanschaumstoff, hergestellt gemäß dem Verfahren von Anspruch 5.

7. Polyurethanschaumstoff gemäß Anspruch 4, der mindestens 1,25 Gew.-% Tribromneopentylgruppen enthält.

8. Polyurethanschaumstoff gemäß Anspruch 7, der bis zu 3,5 Gew.-% Tribromneopentylgruppen enthält.

## Revendications

1. Une composition formant du polyuréthane et/ou de la polyurée en deux parties comprenant un constituant réactif aux isocyanates formulé et un constituant isocyanate formulé, dans laquelle le constituant réactif aux isocyanates formulé inclut au moins un polyol et au moins 2 pour cent en poids, rapporté au poids de la composition réactive aux isocyanates formulée, d'alcool tribromonéopentylique et le constituant isocyanate formulé contient au moins un polyisocyanate organique et au moins 2 pour cent en poids, rapporté au poids de la composition polyisocyanate formulée, de 2,2-bis(chlorométhyl)triméthylène bis(bis(2-chloroéthyl)phosphate).

2. Une composition selon la revendication 1, dans laquelle l'un ou l'autre ou l'un et l'autre des constituants contient un agent gonflant.

3. Un polymère de polyuréthane et/ou de polyurée réalisé en mélangeant le constituant réactif aux isocyanates et le constituant isocyanate de la composition formant du polyuréthane et/ou de la polyurée de la revendication 1 et en soumettant le mélange résultant à des conditions suffisantes pour que les constituants réagissent afin de former un polymère de polyuréthane et/ou de polyurée.

4. Un polymère de polyuréthane et/ou de polyurée selon la revendication 3, dans lequel la composition formant du polyuréthane et/ou de la polyurée en deux parties utilisée est une composition selon la revendication 2, et le polymère de polyuréthane et/ou de polyurée résultant se présente sous la forme d'une mousse.

5. Un procédé pour préparer une mousse de polyuréthane souple, selon la revendication 4, comprenant :
A. le fait de former un mélange réactionnel incluant un constituant réactif aux isocyanates formulé de la revendication 1 et un constituant isocyanate formulé de la revendication 1, dans lequel le constituant réactif aux isocyanates formulé inclut au moins un polyol ayant un poids équivalent d'hydroxyle d'au moins 200, et 3,5 à 5 parties d'eau pour 100 parties en poids de polyol total, et
B. le fait de soumettre le mélange réactionnel à des conditions suffisantes pour amener le mélange réactionnel à s'expanser et durcir afin de former une mousse de polyuréthane.

6. Une mousse de polyuréthane réalisée selon le procédé de la revendication 5.

7. La mousse de polyuréthane de la revendication 4, laquelle contient au moins 1,25 % en poids de groupes tribromonéopentyliques.

8. La mousse de polyuréthane de la revendication 7, laquelle contient jusqu'à 3,5 % en poids de groupes tribromonéopentyliques.
